# EUROPEAN PATENT APPLICATION

(11) **EP 4 421 414 A1**
(43) Date of publication of application: **28.08.2024**
(21) Application number: 22900382.7
(22) Date of filing: 25.11.2022
(51) Int. Cl.: F25B 41/345, F16K 31/06

(54) **EXPANSION VALVE COIL STRUCTURE AND EXPANSION VALVE**

(30) Priority: 30.11.2021 CN 202122989503 U
(71) Applicant: Zhejiang Dunan Artificial Environment Co., Ltd., Shaoxing Zhejiang 311835 (CN)
(72) Inventor: ZHANG, Jiyou, Shaoxing, Zhejiang 311835 (CN); CHEN, Yonghao, Shaoxing, Zhejiang 311835 (CN); ZHENG, Lifeng, Shaoxing, Zhejiang 311835 (CN)
(74) Representative: Viering, Jentschura & Partner mbB Patent- und Rechtsanwälte
(86) International application number: PCT/CN2022/134248
(87) International publication number: WO 2023/098577

(57) **Abstract**

An expansion valve coil structure (100) and an expansion valve (200) are provided. The expansion valve coil structure (100) includes a stator housing (10) and an electromagnetic pole plate (20), the stator housing (10) and the electromagnetic pole plate (20) are disposed opposite to each other. The stator housing (10) and the electromagnetic pole plate (20) are both provided with a plurality of processed exposed surfaces (50). A surface of the stator housing (10), a surface of the electromagnetic pole plate (20) and each of the plurality of processed exposed surfaces (50) are each covered with an antirust layer (60), respectively. The expansion valve (200) includes the expansion valve coil structure (100).

## Description

### CROSS-REFERENCE TO RELATED APPLICATION

This application claims priority to Chinese patent application No. 202122989503.4, filed on November 30, 2021, and titled "EXPANSION VALVE COIL STRUCTURE AND EXPANSION VALVE". The content of the above identified application is hereby incorporated herein in its entirety by reference.

### TECHNICAL FIELD

The present application relates to the field of electromagnetic valve technology, and in particular, to an expansion valve coil structure and an expansion valve.

### BACKGROUND

In the related art, materials used for processing an expansion valve coil structure are usually coated with antirust materials. After the corresponding materials are processed to form a stator housing and an electromagnetic pole plate, an antirust layer on material surfaces of the stator housing and the electrode plate may be destroyed, and there were a plurality of exposed surfaces formed by processing, which greatly weakened an antirust ability of the formed expansion valve coil structure.

### SUMMARY

According to various embodiments of the present application, an expansion valve coil structure and an expansion valve are provided with enhanced antirust ability and comprehensive antirust.

The present application provides an expansion valve coil structure. The expansion valve coil structure includes a stator housing and an electromagnetic pole plate. The stator housing and the electromagnetic pole plate are disposed opposite to each other. The stator housing and the electromagnetic pole plate are both provided with a plurality of processed exposed surfaces. A surface of the stator housing, a surface of the electromagnetic pole plate and each of the plurality of processed exposed surfaces are each covered with an antirust layer, respectively.

With this arrangement, it can be ensured that each processed exposed surface of the stator housing and each processed exposed surface of the electromagnetic pole plate are covered with the antirust layer. It can effectively improve an antirust ability of the stator housing and an antirust ability of the electromagnetic pole plate, thereby enhancing an antirust ability of the expansion valve coil structure and prolonging a service life of the expansion valve coil structure.

In some embodiments, a thickness of the antirust layer is in a range of 2 µm to 30 µm.

Within this thickness range, the antirust layer has little influence on a magnetic conductivity energy of the electromagnetic pole plate, and an antirust effect of the electromagnetic pole plate is greater. Considering magnetic conductivity energy, antirust effect and processing technology, the thickness of the antirust layer can be 2 µm -30 µm. In this way, a requirement for machining accuracy is low, and a machining difficulty is reduced.

In some embodiments, the thickness of the antirust layer is in a range of 8 µm to 16 µm.

With this arrangement, the influence of the antirust layer on the magnetic conductivity energy of the electromagnetic pole plate can be ignored.

In some embodiments, the antirust layer is disposed on the surface of the stator housing, the surface of the electromagnetic pole plate and each of the plurality of processed exposed surfaces by plating or coating.

The antirust layer is added to each surface by plating or coating, the plating or coating process is simple, and each surface can be evenly covered with the antirust layer, especially for hidden positions such as hole walls and bending corners. This process can effectively coat hidden positions.

In some embodiments, a plurality of first claw electrodes are formed on the stator housing, and the plurality of first claw electrodes are distributed at intervals along a circumferential direction of the stator housing; a plurality of second claw electrodes are correspondingly processed on the electromagnetic pole plate, the plurality of second claw electrodes are distributed at intervals along a circumferential direction of the electromagnetic pole plate, the plurality of first claw electrodes and the plurality of second claw electrodes are arranged opposite to each other and inserted in an alternating configuration in intervals to enclose and form an internal hole of the expansion valve coil structure.

In some embodiments, the plurality of processed exposed surfaces comprises surfaces of the plurality of first claw electrodes and surfaces of the plurality of second claw electrodes.

With this arrangement, an antirust property of the plurality of first claw electrodes and an antirust property of the plurality of second claw electrodes are effectively enhanced.

In some embodiments, the stator housing is provided with a plurality of first positioning holes, and the antirust layer is further disposed on a hole wall of each of the plurality of first positioning holes.

In some embodiments, a circumferential side wall of the stator housing is provided with an avoidance port, and the antirust layer is further disposed on each surface of the avoidance port.

In some embodiments, the electromagnetic pole plate is provided with a plurality of second positioning holes and a plurality of third positioning holes, and the antirust layer is further disposed on a hole wall of each of the plurality of second positioning holes and a hole wall of each of the plurality of third positioning holes, respectively.

The present application further provides an expansion valve including the above expansion valve coil structure is provided.

Details of one or more embodiments of this application are presented in the attached drawings and descriptions below. And other features, purposes and advantages of this application will become apparent from the description, drawings and claims.

### BRIEF DESCRIPTION OF THE DRAWINGS

For a better description and illustration of embodiments and/or examples of those disclosures disclosed herein, reference may be made to one or more attached drawings. Additional details or examples used to describe the drawings should not be considered as limiting the scope of any of the disclosed disclosures, currently described embodiments and/or examples, and currently understood best modes of these disclosures.
FIG. 1 is a schematic view of a stator housing in an embodiment of the present application.
FIG. 2 is a schematic view of an electromagnetic pole plate in an embodiment of the present application.
FIG. 3 is a sectional view of an expansion valve coil structure in an embodiment of the present application.
FIG. 4 is a schematic view of an expansion valve in an embodiment of the present application.
FIG. 5 is a sectional view of an expansion valve in an embodiment of the present application.

Reference signs are as follows: 100 represents an expansion valve coil structure; 10 represents a stator housing; 11 represents a first claw electrode; 12 represents an avoidance port; 14 represents a first positioning hole; 20 represents an electromagnetic pole plate; 21 represents a second claw electrode; 22 represents an ear portion; 23 represents a second positioning hole; 24 represents a third positioning hole; 30 represents a coil framework; 31 represents a plug wire portion; 40 represents an internal hole; 50 represents a processed exposed surface; 60 represents an antirust layer; and 70 represents a coil; and 200 represents an expansion valve.

### DETAILED DESCRIPTION

The technical scheme in the embodiment of this application will be described clearly and completely with the attached drawings. Obviously, the described embodiment is only a part of the embodiment of this application, not the whole embodiment. Based on the embodiments in this application, all other embodiments obtained by ordinary technicians in this field without creative work belong to the protection scope of this application.

It should be noted that when a component is considered to be "mounted" on another component, it can be directly on the other component or there can be a component in the middle. When a component is considered to be "set on" another component, it can be directly set on another component or there may be intervening components at the same time. When a component is considered to be "fixed" to another component, it can be directly fixed to another component or there may be intervening components at the same time.

Unless otherwise defined, all technical and scientific terms used herein have the same meaning as commonly understood by those skilled in the technical field of this application. The terminology used herein in the specification of this application is only for the purpose of describing specific embodiments, and is not intended to limit this application. As used herein, the term "or/and" includes any and all combinations of one or more related listed items.

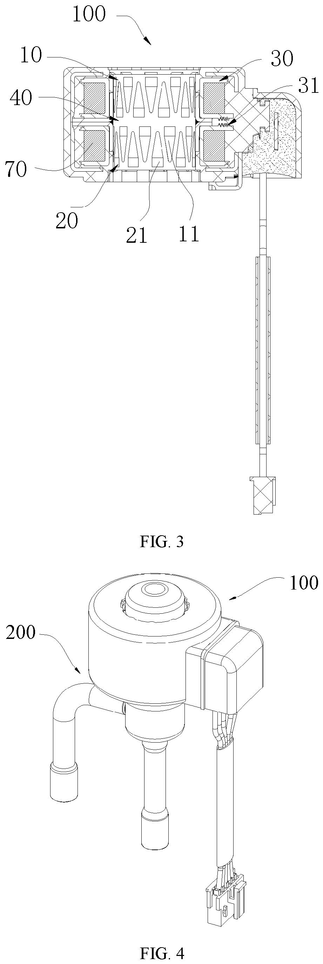

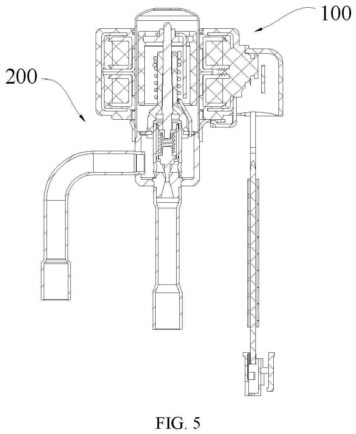

Referring to FIG. 3 to FIG. 5, the present application provides an expansion valve 200. The expansion valve 200 is mainly composed of a valve body (not shown) and an expansion valve coil structure 100. The expansion valve coil structure 100 includes a stator housing 10 and an electro-magnetic pole plate 20, and the stator housing 10 and the electromagnetic pole plate 20 are disposed opposite to each other.

The stator housing 10 and the electromagnetic pole plate 20 are main components of the expansion valve coil structure 100. However, in the related art, before processing, surfaces of materials used to form the stator housing 10 and the electromagnetic pole plate 20 have been coated with antirust coatings. After processing and molding, an antirust layer 60 on a surface of raw materials is damaged, and there are many processed exposed surfaces such as incision and cut surface on the molded stator housing 10 and the electromagnetic pole plate 20. Without the antirust layer 60 on each of the processed exposed surface 50, the stator housing 10 and the electromagnetic pole plate 20 are easy to rust and cannot effectively protect coil, which affects a service life and effect of the expansion valve 200.

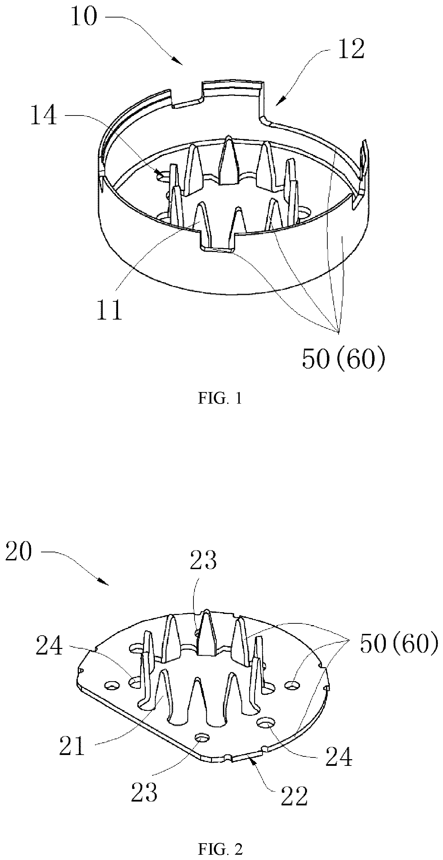

Referring to FIG. 1 and FIG. 2, the stator housing 10 and the electromagnetic pole plate 20 are both provided with a plurality of processed exposed surfaces 50. A surface of the stator housing 10, a surface of the electromagnetic pole plate 20 and each of the plurality of processed exposed surfaces 50 are each covered with an antirust layer 60, respectively.

In the present application, the stator housing 10 and the electromagnetic pole plate 20 after processing and molding are rusted. The antirust layer 60 is covered on the processed exposed surface 50 on the stator housing 10 and the electromagnetic pole plate 20 to achieve comprehensive rust protection. It can effectively improve an antirust ability of the stator housing 10 and an antirust ability of the electromagnetic pole plate 20, thereby enhancing an antirust ability of the expansion valve coil structure 200 and prolonging a service life of the expansion valve coil structure 100.

Referring to FIG. 1 and FIG. 2, a plurality of first claw electrodes 11 are formed on the stator housing 10, and the plurality of first claw electrodes 11 are distributed at intervals along a circumferential direction of the stator housing 10. A plurality of second claw electrodes 21 are correspondingly processed on the electromagnetic pole plate 20, the plurality of second claw electrodes 21 are distributed at intervals along a circumferential direction of the electromagnetic pole plate 20. The plurality of first claw electrodes 11 and the plurality of second claw electrodes 21 are arranged opposite to each other and inserted in an alternating configuration in intervals to enclose and form an internal hole 40 of the expansion valve coil structure 200.

In an embodiment, the processed exposed surface 50 includes surfaces of the plurality of first claw electrodes 11 and surfaces of the plurality of second claw electrodes 21. The plurality of first claw electrodes 11 and the plurality of second claw electrodes 21 are processed and formed on the stator housing 10 and the electromagnetic pole plate 20, respectively, which leads to a destruction of the antirust layer 60 in the raw materials, and additional incisions or cut surfaces are generated during processing. By coating the antirust layer 60 on the cut surfaces and/or incisions formed after the processing of the plurality of first claw electrodes 11 and the plurality of second claw electrode 21, the antirust ability of the plurality of first claw electrodes 11 and the plurality of second claw electrodes 21 can be effectively improved.

The expansion valve coil structure 100 further includes a coil framework 30, and a coil 70 is wound around the coil framework 30 to form a coil winding. The coil winding is located between the stator housing 10 and the electromagnetic pole plate 20, and the plurality of first claw electrodes 11 and the plurality of second claw electrodes 21 are located in the coil winding. Such that the coiled coil 70 is enclosed outside the internal hole 40 of the expansion valve coil structure 100.

Referring to FIG. 1, the stator housing 10 is provided with a plurality of first positioning holes 14, and positioning protrusions of the coil framework 30 extend into the plurality of first positioning holes 14 to realize a positioning between the coil framework 30 and the stator housing 10. In some embodiments, the antirust layer 60 is further disposed on a hole wall of each of the first positioning holes 14, that is, the processed exposed surface 50 includes a hole wall surface of the first positioning hole 14. In this way, the stator housing 10 can be protected from details, and a joint between the stator housing 10 and the coil framework 30 can be prevented from rusting, which will affect a connection stability and a service life of the stator housing 10 and a connection stability and a service life of the coil framework 30.

Referring to FIG. 1 and FIG. 3, a circumferential side wall of the stator housing 10 is provided with an avoidance port 12, and when assembled, the stator housing 10 covers the coil framework 30 and the electromagnetic pole plate 20. The avoidance port 12 is configured for parts of the coil framework 30 protruding from the stator housing 10 to pass through, such as the plug wire portion 31 protruding from the coil framework 30 and the ear part 22 protruding from the electromagnetic pole plate 20. In addition, the antirust layer 60 is further disposed on each surface of the avoidance port 12, that is, the processed exposed surface 50 includes the machined surface of the avoidance port 12, thereby preventing the local position of the stator housing 10 from rusting and enhancing the antirust ability of the stator housing 10.

Referring to FIG. 2 and FIG. 3, the electromagnetic pole plate 20 is provided with a plurality of second positioning holes 23 and a plurality of third positioning holes 24, A hole wall of each of the plurality of second positioning holes 23 and a hole wall of each of the plurality of third positioning holes 24 are covered with the antirust layer 60, that is, the processed exposed surface 50 includes wall surfaces of the plurality of second positioning holes 23 and wall surfaces of the plurality of third positioning holes 24. The expansion valve coil structure 100 includes two coil frameworks 30, and two the electromagnetic pole plates 20 are located between the two coil frameworks 30. The plurality of second claw electrodes 21 of two of the electromagnetic pole plate 20 are arranged back-to-back. The plurality of second positioning holes 23 are configured to cooperate with the positioning protrusions on the adjacent electromagnetic pole plates 20 to realize mutual positioning between the electromagnetic pole plates 20. The plurality of third positioning holes 24 are configured for matching of positioning protrusions on the coil framework 30 to realize the mutual positioning between them, so that the two corresponding coil frameworks 30 are relatively fixed and a displacement of the coil framework 30 and the electromagnetic pole plate 20 is prevented.

In an embodiment, the plurality of second positioning holes 23 and the plurality of third positioning holes 24 are alternately arranged at intervals, so that the positioning positions are evenly distributed and positioning is more stable.

In an embodiment, the plurality of second positioning holes 23 and the plurality of third positioning holes 24 are arranged along a circumferential direction of the electromagnetic pole plate 20, so as to ensure that all directions of the electromagnetic pole plate 20 can be fixed and prevent the electromagnetic pole plate 20 from shifting.

In an embodiment, the antirust layer 60 is disposed on the surface of the stator housing 10, the surface of the electromagnetic pole plate 20 and each of the plurality of processed exposed surfaces 50 by a plating process or a coating process. The plating process or the coating process is simple, and each surface can be evenly covered with the antirust layer 60, especially for hidden positions such as hole walls and bending corners. This process can effectively coat hidden positions. In other embodiments, a processing mode of the antirust layer 60 is not limited to the above.

In an embodiment, a thickness of the antirust layer 60 is in a range of 2 µm to 30 µm. When the thickness of the antirust layer 60 is less than 2 µm, a surface coating is damaged and loses the antirust function in a production process, while when the thickness of the antirust layer 60 is more than 30 µm, the thickness of the antirust layer 60 is too thick, which is easy to cause the antirust layer 60 to blister and fall off and lose the antirust function. Therefore, the thickness of the antirust layer 60 is in the range of 2 µm to 30 µm in the present application, and within this range, the antirust layer 60 has little influence on magnetic conductivity performance of the electromagnetic pole plate 20. The thicker the antirust layer 60, the lower the requirements for coating or electroplating of the antirust layer 60 are, thus reducing a processing cost of products. In other embodiments, the thickness of the antirust layer 60 is not limited to the above thickness, and the thickness of the antirust layer 60 can also be determined according to an actual application.

In an embodiment, the thickness of the antirust layer 60 is in a range of 8 µm to 16 µm. With this arrangement, the influence of the antirust layer 60 on the magnetic conductivity energy of the electromagnetic pole plate 20 can be ignored.

Furthermore, the antirust layer 60 can be zinc plating, nickel plating, tin plating, chromium plating, etc. Of course, it can also be other anti-rust materials, such as alloy plating. The specific material of the antirust layer 60 can be selected according to the application environment, for example, in the organic acid environment, the antirust layer can be selected as tin coating. When electrochemical corrosion occurs, a plating metal at an anode is continuously lost to protect a base metal, and then the stator housing 10 and the electromagnetic pole plate 20 are electrochemically protected.

In an embodiment, the antirust layer 60 can be provided with one or more layers, and the materials of each layer can be the same or different, for example, the surface of the stator housing 10 is plated with zinc coating first, and then with chromium coating with higher hardness.

In an embodiment, the stator housing 10 and the electromagnetic pole plate 20 are made of non-austenitic stainless steel. This design can further improve a corrosion resistance of the product without affecting the magnetic permeability of the product. Non-austenitic stainless steel has good strength properties, which makes the plurality of first claw electrodes 11 and the plurality of second claw electrodes 21 difficult to deform, and it can avoid an influence of claw electrode deformation on an actuation performance. In addition, the thickness of the claw electrode can be further reduced, which is beneficial to a miniaturization of the expansion valve 200.

In addition, it should be noted that the words "first" and "second" are used to define parts only for a convenience of distinguishing corresponding parts. Unless otherwise stated, the above words have no special meaning, so they cannot be understood as limiting a protection scope of the present invention.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

One of ordinary skill in the art should recognize that the above embodiments are used only to illustrate the present application and are not used to limit the present application, and that appropriate variations and improvements to the above embodiments fall within the protection scope of the present application so long as they are made without departing from the substantial spirit of the present application.

## Claims

1. An expansion valve coil structure, comprising a stator housing and an electromagnetic pole plate, wherein the stator housing and the electromagnetic pole plate are disposed opposite to each other;
**characterized in that** the stator housing and the electromagnetic pole plate are both provided with a plurality of processed exposed surfaces; a surface of the stator housing, a surface of the electromagnetic pole plate and each of the plurality of processed exposed surfaces are each covered with an antirust layer, respectively.

2. The expansion valve coil structure of claim 1, wherein a thickness of the antirust layer is in a range of 2 µm to 30 µm.

3. The expansion valve coil structure of claim 2, wherein the thickness of the antirust layer is in a range of 8 µm to 16 µm.

4. The expansion valve coil structure of claim 1, wherein the antirust layer is disposed on the surface of the stator housing, the surface of the electromagnetic pole plate and each of the plurality of processed exposed surfaces by plating or coating.

5. The expansion valve coil structure of claim 1, wherein a plurality of first claw electrodes are formed on the stator housing, and the plurality of first claw electrodes are distributed at intervals along a circumferential direction of the stator housing; a plurality of second claw electrodes are correspondingly processed on the electromagnetic pole plate, the plurality of second claw electrodes are distributed at intervals along a circumferential direction of the electromagnetic pole plate, the plurality of first claw electrodes and the plurality of second claw electrodes are arranged opposite to each other and inserted in an alternating configuration in intervals to enclose and form an internal hole of the expansion valve coil structure.

6. The expansion valve coil structure of claim 5, wherein the plurality of processed exposed surfaces comprises surfaces of the plurality of first claw electrodes and surfaces of the plurality of second claw electrodes.

7. The expansion valve coil structure of claim 1, wherein the stator housing is provided with a plurality of first positioning holes, and the antirust layer is further disposed on a hole wall of each of the plurality of first positioning holes.

8. The expansion valve coil structure of claim 1, wherein a circumferential side wall of the stator housing is provided with an avoidance port, and the antirust layer is further disposed on each surface of the avoidance port.

9. The expansion valve coil structure of claim 1, wherein the electromagnetic pole plate is provided with a plurality of second positioning holes and a plurality of third positioning holes, and the antirust layer is further disposed on a hole wall of each of the plurality of second positioning holes and a hole wall of each of the plurality of third positioning holes, respectively.

10. An expansion valve, **characterized by** comprising the expansion valve coil structure of any one of claims 1 to 9.
